# EUROPÄISCHE PATENTSCHRIFT

(11) **EP 2 375 843 B1**
(45) Veröffentlichungstag und Bekanntmachung des Hinweises auf die Patenterteilung: **20.04.2016**
(21) Anmeldenummer: 10185183.0
(22) Anmeldetag: 15.02.2000
(51) Int. Cl.: H04W 72/10

(54) **Betrieb eines Mobilfunknetzes unter Verwendung von Zugriffsberechtigungsdaten**
Operation of a mobile radio network using access permission data
Opération d'un réseau mobile utilisant des données de permission d'accès

(30) Priorität: 08.03.1999 DE 19910239
(43) Veröffentlichungstag der Anmeldung: 12.10.2011
(62) Teilanmeldung aus: 10002772.1
(73) Patentinhaber: IPCom GmbH & Co. KG, 82049 Pullach (DE)
(72) Erfinder: Fischer, Ralf, 31199, Diekholzen (DE); Hans, Martin, 31162, Bad Salzdetfurth (DE); Kowalewski, Frank, 37085, Göttigen (DE); Laumen, Josef, 85375, Neufahrn (DE); Schmidt, Gunnar, 78052, Villingen-Schwenningen (DE); Lechner, Detlef, 12101, Berlin-Tempelhof (DE); Schulz, Holger, 10587, Berlin (DE)
(74) Vertreter: Molnia, David

(56) Entgegenhaltungen:
- WO-A1-97/09836
- WO-A1-97/19525
- ANONYMOUS: "Minutes of the L1EG meeting", CEPT/CCH/GSM/L1EG, 31. August 1987 (1987-08-31), - 2. September 1987 (1987-09-02), Seite 12 PP, XP002615156, CEPT
- "Digital cellular telecommunications system (Phase 2+); General Packet Radio Service (GPRS); Mobile Station (MS) - Base Station System (BSS) interface; Radio Link Control/ Medium Access Control (RLC/MAC) protocol (GSM 04.60 version 6.2.0 Release 1997)", 3GPP STANDARD; GSM 04.60, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V6.2.0, 1. Oktober 1998 (1998-10-01), Seiten 1-181, XP050358536,

## Beschreibung

Die Erfindung geht von einer Teilnehmerstation zum Betrieb in einem Mobilfunknetz, einem Verfahren zur Zugriffskontrolle, auf einen Telekommunikationskanal für eine Teilnehmerstation sowie einer entsprechenden Teilnehmerstation und einem entsprechenden Mobilfunknetz nach der Gattung der unabhängigen Ansprüche aus.

Aus der nicht vorveröffentlichten deutschen Patentanmeldung mit dem Aktenzeichen DE 198 38 832 A1 wird ein Verfahren zur Zugriffskontrolle auf einen Telekommunikationskanal eines Telekommunikationsnetzes für mindestens eine Teilnehmerstation des Telekommunikationsnetzes beschrieben, wobei Informationssignale an die mindestens eine Teilnehmerstation übertragen werden.

Die GSM 04.60 V6.2.0 (1998-10) offenbart ein Verfahren zur Zugangsberechtigung mehrerer Mobilstationen zu einem Telekommunikationskanal eines Mobilfunknetzes in Abhängigkeit von Zugriffskontrollklassen und Persistenzschwellwerten.

Darüber hinaus offenbart die GSM 02.11 V.6.0.0 (1998-07) weitere Informationen zu Nutzerklassen und entsprechenden Kanalzugangsberechtigungen von Mobilstationen. Das Dokument CEPT/CCH/GSM/L1EG "Minutes of the L1EG meeting" ist ein Sitzungsprotokoll einer Expertengruppe, die vom 31. August - 2. September 1987 tagte und einen neuen Telekommunikationsstandard zu entwerfen hatte. Dieses Dokument erwägt in Anhang 5, dass es Gruppen oder Dienste geben könnte, die einer Bevorzugung zum Zugriff auf ein Telekommunikationssystem erhalten sollen.

### Vorteile der Erfindung

Die erfindungsgemäße Teilnehmerstation, das erfindungsgemäße Verfahren und das erfindungsgemäße Mobilfunknetz mit den Merkmalen der unabhängigen Ansprüche haben demgegenüber den Vorteil, dass mit den Informationssignalen Zugriffsberechtigungsdaten zur mindestens einen Teilnehmerstation übertragen werden, dass bei Empfang der Zugriffsberechtigungsdaten in einer Auswerteeinheit der mindestens einen Teilnehmerstation geprüft wird, ob die Zugriffsberechtigungsdaten Zugriffsberechtigungsdaten einen Zugriffsschwellwert umfassen, wobei der Zugriffsschwellwert mit einer Zufallszahl oder einer Pseudozufallszahl verglichen wird, und dass das Zugriffsrecht auf einen Telekommunikationskanal der mindestens einen Teilnehmerstation in Abhängigkeit des Vergleichsergebnisses, vorzugsweise unter der Bedingung, dass die Zufallszahl oder die Pseudozufallszahl größer oder gleich dem Zugriffsschwellwert ist, zugeteilt wird. Auf diese Weise lässt sich eine zufällige Verteilung der Zugangsberechtigung zu diesem Telekommunikationskanal für eine oder mehrere Teilnehmerstationen realisieren. Diese Zugriffskontrolle nimmt ein Minimum an Übertragungskapazität für die Übertragung der Informationssignale in Anspruch, da sie lediglich durch Übertragung des Zugriffsschwellwertes bewirkt wird.
Durch die in den Unteransprüchen aufgeführten Maßnahmen sind vorteilhafte Weiterbildungen und Verbesserungen der im unabhängigen Anspruch 1 angegebenen

Teilnehmerstation, des im unabhängigen Anspruch 4 angegebenen Verfahrens bzw. des im unabhängigen Anspruch 9 angegebenen Mobilfunknetzes möglich.

Besonders vorteilhaft, jedoch nicht beansprucht, ist es, dass in der Auswerteeinheit der mindestens einen Teilnehmerstation geprüft wird, ob die Zugriffsberechtigungsdaten Zugriffsberechtigungsinformationen mit Zugriffsklasseninformationen für mindestens eine vorgegebene Nutzerklasse umfassen, wobei in diesem Fall und unter der Voraussetzung, dass die mindestens eine Teilnehmerstation der mindestens einen vorgegebenen Nutzerklasse zugeordnet ist, der Zugriff auf einen Telekommunikationskanal der mindestens einen Teilnehmerstation in Abhängigkeit des Zugriffsklasseninformation für diese Nutzerklasse erteilt wird. Auf diese Weise können Teilnehmerstationen einer vorgegebenen Nutzerklasse selbst dann zur Nutzung des Telekommunikationskanals zugelassen werden, wenn sie aufgrund der zufälligen Verteilung mittels Zugriffsschwellwert nicht zum Zugriff auf diesen Telekommunikationskanal berechtigt wären. So können beispielsweise Teilnehmerstationen von Notdiensten, wie der Polizei oder der Feuerwehr einer solchen vorgegebenen Nutzerklasse zugeordnet sein, die dann unabhängig von der zufälligen Verteilung durch entsprechende Zugriffsschwellwertinformationen priorisiert auf den Telekommunikationskanal zugreifen können.

Ein weiterer Vorteil, der jedoch nicht beansprucht ist, besteht darin, dass in der Auswerteeinheit der mindestens einen Teilnehmerstation geprüft wird, ob die Zugriffsberechtigungsdaten Prioritätsinformationen in Form eines Prioritätsschwellwertes umfassen, wobei in diesem Fall und unter der Voraussetzung, dass die mindestens eine Teilnehmerstation einer Prioritätsklasse mit einem Prioritätswert zugeordnet ist, der Prioritätswert mit dem Prioritätsschwellwert verglichen wird, und der Zugriff auf einen Telekommunikationskanal der mindestens einen Teilnehmerstation in Abhängigkeit des Vergleichsergebnisses, vorzugsweise unter der Bedingung, dass der Prioritätswert größer oder gleich dem Prioritätsschwellwert ist, erteilt wird. Auf diese Weise kann unter den zufällig für den Zugriff auf diesen Telekommunikationskanal berechtigten Teilnehmerstationen zusätzlich eine weitere Auswahl getroffen werden, die Teilnehmerstationen höherer Priorität für den Zugriff auf diesen Telekommunikationskanal bevorzugt. Auch auf diese Weise können Teilnehmerstationen von Notdiensten, wie der Polizei oder der Feuerwehr priorisiert werden, allerdings in Abhängigkeit der zufälligen Verteilung mittels Zugriffsschwellwert.

Ein weiterer Vorteil, der jedoch nicht beansprucht ist, besteht darin, dass in der Auswerteeinheit der mindestens einen Teilnehmerstation geprüft wird, ob die Zugriffsberechtigungsdaten Teilnehmerdiensteinformationen umfassen, die für vom Telekommunikationsnetz angebotene Telekommunikationsdienste angeben, ob der Zugriff auf einen Telekommunikationskanal für die Anforderung eines solchen Telekommunikationsdienstes freigegeben ist. Für jede der nach den oben genannten Kriterien zugriffsberechtigten Nutzerklassen wird zusätzlich festgelegt, welche Telekommunikationsdienste über den Telekommunikationskanal angefordert werden können. Auf diese Weise wird wiederum Übertragungskapazität für die Übertragung der Informationssignale eingespart, da nicht von verschiedenen - nach den obigen Kriterien - zugriffsberechtigten Nutzerklassen unterschiedliche Telekommunikationsdienste angefordert werden können, sondern für jede dieser vorausgewählten Teilnehmerstationen lediglich die spezifizierten Telekommunikationsdienste über diesen Telekommunikationskanal angefordert werden können. Somit muss nur ein Minimum an Dienstinformationen mit den Informationssignalen übertragen werden.

Ein weiterer Vorteil, der jedoch nicht beansprucht ist, besteht darin, dass in der Auswerteeinheit der mindestens einen Teilnehmerstation geprüft wird, ob die Zugriffsberechtigungsdaten eine Auswerteinformation umfassen, die angibt, ob die Zugriffsberechtigungsdaten entweder einen Zugriffsschwellwert oder Zugriffsklasseninformationen umfassen, und dass die Zugriffsberechtigungsdaten entsprechend dem Prüfergebnis in der mindestens einen Teilnehmerstation ausgewertet werden. Auf diese Weise kann die für die Übertragung der Informationssignale erforderliche Übertragungskapazität weiter reduziert werden, in dem die Zugriffsberechtigungsinformationen entweder nur den Zugriffsschwellwert oder nur die Zugriffsklasseninformationen, jedoch nicht beides zusammen umfassen.

Ein weiterer Vorteil, der jedoch nicht beansprucht ist, besteht darin, dass der Zugriff auf diesen Telekommunikationskanal der mindestens einen Teilnehmerstation in Abhängigkeit des Nachrichtenverkehrsaufkommens auf mindestens einem Telekommunikationskanal freigegeben wird. Auf diese Weise lässt sich eine optimale Verteilung der Ressourcen des Telekommunikationsnetzes auf die Teilnehmerstationen bei bestmöglicher Nutzung der Übertragungskapazität erzielen.

### Zeichnung

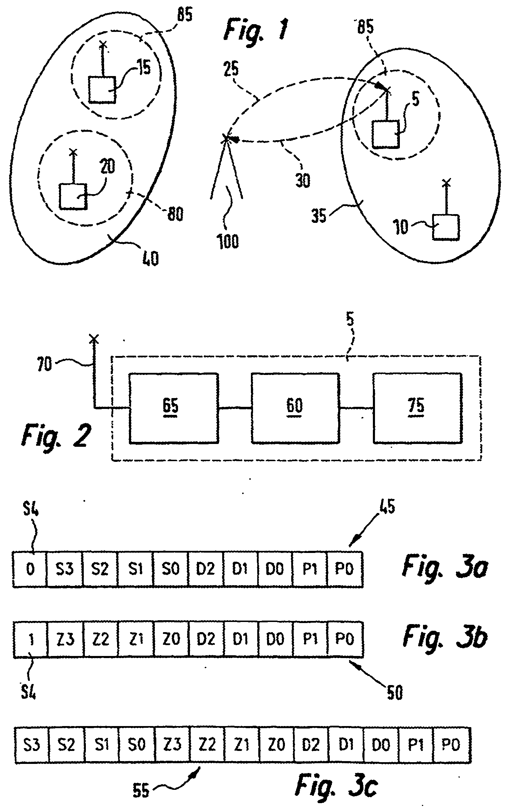

Ausführungsbeispiele der Erfindung sind in der Zeichnung dargestellt und in der nachfolgenden Beschreibung näher erläutert. Es zeigen Figur 1 einen Ausschnitt aus einem Telekommunikationsnetz,

Figur 2 ein Blockschaltbild einer erfindungsgemäßen Teilnehmerstation,

Figur 2a ein erstes Bitmuster für die Zuteilung des Zugriffs auf einen Telekommunikationskanal,

Figur 3b ein zweites Bitmuster für die Zuteilung des Zugriffs auf einen Telekommunikationskanal,

Figur 3c ein drittes Bitmuster für die Zuteilung des Zugriffs auf einen Telekommunikationskanal, und Die Figuren 4a, 4b und 4c einen Ablaufplan für die Funktionsweise einer Auswerteeinheit der erfindungsgemäßen Teilnehmerstation.

### Beschreibung der Ausführungsbeispiele

In Figur 1 kennzeichnet 100 eine Basisstation eines als Mobilfunknetz ausgebildeten Telekommunikationsnetzes. Ein solches Mobilfunknetz ist normalerweise zellular aufgebaut, wobei jede Funkzelle des Mobilfunknetzes von einer Basisstation versorgt wird. Die Basisstation 100 spannt also eine Funkzelle im Mobilfunknetz auf, in der gemäß Figur 1 eine erste Teilnehmerstation 5, eine zweite Teilnehmerstation 10, eine dritte Teilnehmerstation 15 und eine vierte Teilnehmerstation 20 angeordnet sind. Bei den vier Teilnehmerstationen 5, 10, 15, 20 soll es sich beispielhaft um Mobilstationen, wie beispielsweise Mobiltelefone, Funktelefone, oder dergleichen handeln. Bei den hier beschriebenen Ausführungsbeispielen sollen also die erste Teilnehmerstation 5 als erste Mobilstation, die zweite Teilnehmerstation 10 als zweite Mobilstation, die dritte Teilnehmerstation 15 als dritte Mobilstation und die vierte Teilnehmerstation 20 als vierte Mobilstation ausgebildet sein.

Ein Netzbetreiber des Mobilfunknetzes bietet eine vorgegebene Anzahl von Telekommunikationsdiensten an. Im folgenden sollen beispielhaft drei verschiedene Telekommunikationsdienste vom Netzbetreiber angeboten werden können. Dabei kann als ein erster Telekommunikationsdienst beispielsweise ein Dienst für die Versendung kleiner Datenpakete vorgesehen sein, der von den Mobilstationen 5,10,15,20 benutzt werden kann, um kleine Datenpakete an die Basisstation 100 über einen wahlfreien Zugriffskanal 30, der im folgenden beispielhaft als RACH (Random Access Channel) ausgebildet sein soll, zu übertragen. Als ein zweiter Telekommunikationsdienst kann beispielsweise ein Dienst zum Versenden größerer Paketdaten vorgesehen sein, bei dem der RACH 30 von den Mobilstationen 5,10,15,20 benutzt werden darf, um gesonderte Datenkanäle zur Paketdatenübertragung anzufordern. Als ein dritter Telekommunikationsdienst kann beispielsweise ein Dienst zur Sprach-, bzw. leitungsgebundenen Datenübertragung vorgesehen sein, bei dem der RACH 30 von den Mobilstationen 5, 10, 15, 20 benutzt werden darf, um Sprach- und/oder Datenübertragungen einzuleiten oder fortzusetzen.

Die drei Telekommunikationsdienste können einzeln und/oder in beliebiger Kombination den Mobilstationen 5,10,15,20 vom Netzbetreiber erlaubt werden.

Die Telekommunikationsdienste müssen dabei von der entsprechenden Mobilstation über die Basisstation 100 beim Netzbetreiber angefordert werden. Die Telekommunikationsdienste werden üblicherweise über den RACH 30 von den Mobilstationen 5,10,15,20 angefordert oder zugänglich gemacht. Über den RACH 30 können in der Regel Nachrichten von mehreren Mobilstationen an die Basisstation 100 gesendet werden. Auf diese Weise können Nachrichten verschiedener Mobilstationen miteinander kollidieren. Die Basisstation 100 bestätigt daher ordnungsgemäß empfangene Nachrichten, in dem sie entsprechende Bestätigungs- oder Quittierungsinformationen auf einem anderen, in Figur 1 nicht dargestellten Kanal, beispielsweise einem Paging-Kanal, an diejenigen Mobilstationen zurücksendet, deren Nachrichten sie ordnungsgemäß empfangen hat.

Für den Fall, dass die Nachricht einer Mobilstation auf dem RACH 30 mit einer anderen Nachricht kollidiert, findet kein ordnungsgemäßer Empfang dieser Nachricht in der Basisstation 100 statt, so dass die Basisstation 100 auch keine Bestätigungsinformation an die entsprechende Mobilstation zurücksenden kann. Die Mobilstation sendet daher meist nach einer vorgegebenen Zeit, in der keine Bestätigungsinformation von der Basisstation 100 empfangen wurde, die Nachricht erneut über den RACH 30 zur Basisstation 100. Auf diese Weise droht eine Überlastung des RACH 30, der somit die benutzerinitiierte Anforderung von Telekommunikationsdiensten durch die entsprechenden Mobilstationen durch seine begrenzte Übertragungskapazität beschränkt.

Eine Überlastung des RACH 30 kann dadurch vermieden werden, dass der Netzbetreiber den Zugriff auf den RACH für die einzelnen Mobilstationen 5,10,15,20 gezielt einschränkt. Dabei kann der Zugriff auf den RACH beispielsweise nur für bestimmte Nutzerklassen von Mobilstationen vorübergehend oder dauerhaft bevorrechtigt erlaubt werden. Gemäß den beschriebenen Ausführungsbeispielen nach Figur 1 ist eine erste Nutzerklasse 35 vorgesehen, die die erste Mobilstation 5 und die zweite Mobilstation 10 umfasst. Weiterhin ist eine zweite Nutzerklasse 40 vorgesehen, die die dritte Mobilstation 15 und die vierte Mobilstation 20 umfasst. Es kann jedoch auch vorgesehen sein, für jede Mobilstation eine eigene Nutzerklasse vorzusehen. Es könnte auch vorgesehen sein, Nutzerklassen mit unterschiedlicher Anzahl von Mobilstationen vorzusehen.

Weiterhin ist es möglich, mehr als zwei Mobilstationen in einer Nutzerklasse vorzusehen. Der Netzbetreiber kann nun den einzelnen Mobilstationen in Abhängigkeit ihrer Zugehörigkeit zu einer der beiden Nutzerklassen 35,40 der Zugriff auf den RACH freigegeben werden. Das bedeutet, dass den beiden Mobilstationen 5,10 der ersten Nutzerklasse 35 gleiche Rechte für das Senden auf dem RACH zugeteilt werden. In analoger Weise werden auch den Mobilstationen 15,20 der zweiten Nutzerklasse 40 gleiche Rechte für das Senden auf dem RACH zugeteilt.

Der Netzbetreiber informiert die einzelnen Mobilstationen 5,10,15,20 durch Informationssignale, die von der Basisstation 100 an die jeweilige Mobilstation 5,10,15,20 übertragen werden, welche Rechte für das Senden auf dem RACH der entsprechenden Mobilstation 5,10,15,20 zugeteilt sind. Dies wird stellvertretend für alle Mobilstationen 5,10,15,20 im folgenden anhand der Zuteilung der Rechte für das Senden auf dem RACH an die erste Mobilstation 5 gemäß Figur 1 beschrieben.

Dabei überträgt die Basisstation 100 zu vorgegebenen Zeiten Informationssignale an die erste Mobilstation 5. Die Informationssignale können dabei gemäß Figur 1 über einen Signalisierungskanal 25, der im folgenden beispielhaft als Broadcast Control Channel BCCH ausgebildet sein soll, übertragen werden. Dabei wird mit den Informationssignalen zu den vorgegebenen Zeiten jeweils ein Bitmuster an die erste Mobilstation 5 übertragen. Das Bitmuster kann in einer ersten Ausführungsform Informationen darüber enthalten, zu welchem Zweck und für welche Mobilstationen der Zugriff auf den RACH erlaubt ist. Bei den möglichen Zugriffszwecken handelt es sich dabei beispielsweise um die bereits oben beschriebenen Fälle, wie das Versenden kleiner Datenpakete, die Kanalanforderung für größere Paketdaten und die Kanalanforderung für Sprach-/Datendienste. Ein weiterer möglicher Zugriffszweck ist jedoch auch das Versenden von Signalisierungsinformationen von der Teilnehmerstation zur Basisstation, die dem Aufrechterhalten und/oder der Modifikation von bereits bestehenden Verbindungen dienen. Da das von der Basisstation gesendete Bitmuster nicht nur zur ersten Mobilstation 5, sondern auch zu allen anderen Mobilstationen 10,15,20 ebenfalls über den Signalisierungskanal 25, der wie beschrieben als BCCH und damit als Punkt-zu-Mehrpunkt-Kanal ausgebildet ist, so dass alle Mobilstationen die gleichen Informationen zur gleichen Zeit erhalten, gesendet wird, um diesen die ihnen zugeteilten RACH-Zugriffsrechte mitzuteilen, umfasst das Bitmuster die zugeteilten Zugriffsrechte für jede Nutzerklasse 35,40.

Eine zufällige Streuung der Zugriffsberechtigung auf den RACH 30 über einen Teil der Mobilstationen 5,10,15,20 wird erreicht, indem auf dem BCCH 25 ein Zugriffsschwellwert S gesendet wird. In Figur 2 ist beispielhaft ein Blockschaltbild der ersten Mobilstation 5 dargestellt. Die erste Mobilstation 5 umfasst dabei eine Sende-/Emfpangseinheit 65 mit einer Sende-/Empfangsantenne 70. Die Sende-/Emfpangseinheit 65 ist außerdem an eine Auswerteeinheit 60 angeschlossen, die auf eine Zugriffsberechtigungskarte 75, beispielsweise eine SIM-Karte (Subscriber-Identity-Module) zugreift. In Figur 2 sind nur die für die Beschreibung der Erfindung erforderlichen Elemente der ersten Mobilstation 5 dargestellt. Das erfindungsgemäße Verfahren wird im folgenden beispielhaft anhand der ersten Mobilstation 5 beschrieben, wobei die zweite Mobilstation 10, die dritte Mobilstation 15 und die vierte Mobilstation 20 ebenfalls den gemäß Figur 2 beschriebenen Aufbau aufweisen. Die erste Mobilstation 5 empfängt mittels ihrer Sende-/Empfangseinheit 65 die über den BCCH 25 übertragenen Informationssignale, die den Zugriffsschwellwert S umfassen. Der Zugriffsschwellwert S wird der Auswerteeinheit 60 zugeführt. Die Auswerteeinheit 60 zieht vor jedem Zugriff der ersten Mobilstation 5 auf dem RACH 30 eine Zufalls- oder Pseudozufallszahl R und prüft, ob die Zufalls- oder Pseudozufallszahl R mindestens so gross wie der Zugriffsschwellwert S ist. Nur dann ist ein Zugriff auf den RACH 30 erlaubt. Dabei gilt beispielsweise, dass der Zugriffsschwellwert S aus dem Intervall {0,1...n+1} und die Zufalls- oder Pseudozufallszahl R aus dem Intervall {0,1...n} ist. Dadurch kann die Nutzung des RACH 30 mit dem Zugriffsschwellwert S = n +1 für alle Mobilstationen 5,10,15,20 eingeschränkt, das heißt der Zugriff auf den RACH 30 verhindert werden. Wird die Zufalls- oder Pseudozufallszahl R mittels einer gleich verteilten Zufallsfunktion aus dem entsprechenden Intervall {0,1,...n} gezogen, so ist die Wahrscheinlichkeit zum Zugriff auf den RACH 30 für alle Mobilstationen 5,10,15,20 gleich.

Im folgenden wird anhand der Figuren 3a und 3b ein erstes Ausführungsbeispiel beschrieben. Zugriffsberechtigungsdaten 45, 50, 55 sind im ersten Ausführungsbeispiel und den weiteren Ausführungsbeispielen als Bitmuster ausgeführt, wobei die Zugriffsberechtigungsdaten 45, 50, 55 mit den Informationssignalen an die Mobilstationen 5, 10, 15, 20 übertragen werden und wobei die Zugriffsberechtigungsdaten 45, 50, 55 die Informationen über die Rechte zur Nutzung des RACH 30 umfassen. Im ersten Ausführungsbeispiel werden an jede Mobilstation 5, 10, 15, 20 Informationssignale übertragen, die jeweils ein Bitmuster, bestehend aus 10 Bits, umfassen. Dabei ist ein erstes Bit ein Auswertebit S4. Die Figur 3a zeigt den Fall, in dem das Auswertebit S4 = 0 ist. Das zweite Bit ist dann ein erstes Zugriffsschwellwert-Bit S3, dass dritte Bit ein zweites Zugriffsschwellwert-Bit S2, dass vierte Bit ein drittes Zugriffsschwellwert-Bit S1 und das fünfte Bit ein viertes Zugriffsschwellwert-Bit S0. Mit den vier Zugriffsschwellwert-Bits S3, S2, S1, S0 lassen sich an diesem Beispiel 2<4> = 16 Zugriffsschwellwerte S vom Netzbetreiber an die Mobilstationen 5,10,15,20 übertragen, wobei über den BCCH 25 zu allen Mobilstationen 5,10,15,20 der gleiche Zugriffsschwellwert S übertragen wird. Je nach dem aktuellen Nachrichtenverkehrsaufkommen im Telekommunikationsnetz kann der Zugriffsschwellwert S dabei größer oder kleiner eingestellt, dass heißt verändert bzw. angepasst werden. Bei 16 möglichen Zugriffsschwellwerten S können maximal 16 Zugriffsklassen für die Mobilstationen 5,10,15,20 gebündelt werden, wobei die Zugehörigkeit einer Mobilstation 5,10,15,20 zu einer der 16 Zugriffsklassen vom Ziehen einer von 16 Zufalls- oder Pseudozufallszahlen R in der jeweiligen Auswerteeinheit der Mobilstation 5,10,15,20 abhängt und sich somit bei jedem neuen Ziehvorgang ändern kann. Das sechste Bit im ersten Bitmuster 45 ist ein erstes Telekommunikationsdienst-Bit D2, das siebte Bit ist ein zweites Telekommunikationsdienst-Bit D1 und das achte Bit ist ein drittes Telekommunikationsdienst-Bit D0. Das erste Telekommunikationsdienst-Bit D2 gibt an, ob der erste Telekommunikationsdienst genutzt werden kann, das zweite Telekommunikationsdienst-Bit D1 gibt an, ob der zweite Telekommunikationsdienst genutzt werden kann und das dritte Telekommunikationsdienst-Bit D0 gibt an, ob der dritte Telekommunikationsdienst genutzt werden kann. Es kann vereinbart werden, das ein Telekommunikationsdienst dann nutzbar ist, wenn das zugehörige Telekommunikationsdienst-Bit gesetzt ist.

Die Mobilstationen 5,10,15,20 können zusätzlich in sogenannte Prioritätsklassen 80,85 eingeteilt sein. Gemäß Figur 1 ist die vierte Mobilstation 20 in eine erste Prioritätsklasse 80 eingeteilt. Die erste Mobilstation 5 und die dritte Mobilstation 15 sind gemäß Figur 1 in eine zweite Prioritätsklasse 85 eingeteilt. Die zweite Mobilstation 10 ist gemäß Figur 1 in keine Prioritätsklasse eingeteilt. Das neunte Bit des ersten Bitmusters 45 ist ein erstes Prioritätsbit P1 und das zehnte Bit des ersten Bitmusters 45 ist ein zweites Prioritätsbit P0. Somit kann über das erste Bitmuster 45 ein Prioritätsschwellwert P mit vier verschiedene Werten zu den Mobilstationen 5,10,15,20 übertragen werden. Es sind daher maximal vier Prioritätsklassen mit jeweils unterschiedlicher Priorität durch den Prioritätsschwellwert P unterscheidbar. Gemäß Figur 1 sind nur zwei der gemäß Figur 3a möglichen vier Prioritätsklassen dargestellt. So könnte beispielsweise die erste Prioritätsklasse 80 eine Prioritätsklasse für Notdienste wie beispielsweise der Polizei oder der Feuerwehr mit dem höchsten Prioritätswert 4 darstellen. Die zweite Prioritätsklasse 85 könnte beispielsweise eine Prioritätsklasse für einen städtischen Energieversorger mit einem etwas niedrigeren Prioritätswert 3 darstellen. Falls eine Mobilstation 5,10,15,20 zu einer Prioritätsklasse gehört, so ist der zugehörige Prioritätswert auf der Zugangsberechtigungskarte 75 abgelegt und kann dort von der Auswerteeinheit 60 ermittelt werden. Von den Mobilstationen 5,10,15,20, die eine Zufalls- oder Pseudozufallszahl R größer oder gleich den Zugriffsschwellwert S ziehen, erhalten dann nur diejenigen Zugriffsberechtigung auf den RACH 30, deren Prioritätswert auch größer oder gleich dem Prioritätsschwellwert P ist. Im Falle der zweiten Mobilstation 10, die keiner Prioritätsklasse zugeordnet ist, kann dabei vorgesehen sein, dass ihre Auswerteeinheit einen Zufalls- oder Pseudozufallsprioritätswert aus den vier möglichen Prioritätswerten zieht und den gezogenen Prioritätswert mit den übertragenen Prioritätsschwellwert P vergleicht und die Zugriffsberechtigung für den RACH 30 erhält, wenn der gezogene Zufalls- oder Pseudozufallsprioritätswert größer oder gleich dem Prioritätsschwellwert P ist. Vorausgesetzt ist dabei, dass auch die von der Auswerteeinheit der zweiten Mobilstation 10 gezogenen Zufalls- oder Pseudozufallszahl R größer oder gleich dem Zugriffsschwellwert S ist. Es kann jedoch auch vorgesehen sein, dass die Mobilstationen, die keiner Prioritätsklasse angehören, keinen Vergleich mit dem Prioritätsschwellwert P durchführen müssen, sondern lediglich eine Zufalls- oder Pseudozufallszahl R ziehen müssen, die größer oder gleich dem Zugriffsschwellwert S ist, um auf den RACH 30 zugreifen zu dürfen. Eine Mobilstation ist dann keiner Prioritätsklasse zugeordnet, wenn auf der eingeschobenen Zugangsberechtigungskarte 75 kein Prioritätswert abgelegt ist.

Es kann auch vorgesehen sein, dass in einem Speicher der Auswerteeinheit ein vorgegebener Prioritätswert abgespeichert ist, der einem der vier möglichen Prioritätswerte entspricht. Für den Fall, dass die Auswerteeinheit 60 auf der Zugangsberechtigungskarte 75 keinen Prioritätswert ermittelt, kann sie den vorgegebenen Prioritätswert zum Vergleich mit dem Prioritätsschwellwert P in der beschriebenen Weise verwenden.

In Figur 3b ist ein zweites Bitmuster 50 mit ebenfalls einer Bitlänge von 10 Bit dargestellt, wobei der Aufbau des zweiten Bitmuster 50 dem Aufbau des ersten Bitmusters 45 entspricht mit Ausnahme der Tatsache, dass das Auswertebit S4 auf 1 gesetzt ist und daher das zweite Bit, das dritte Bit, das vierte Bit und das fünfte Bit des zweiten Bitmusters 50 nicht mehr als Schwellwertbits sondern als Zugriffsklassenbits definiert sind. So ist das zweite Bit des zweiten Bitmusters 50 ein erstes Zugriffsklassenbit Z3, das dritte Bit des zweiten Bitmusters 50 ein zweites Zugriffsklassenbit Z2, das vierte Bit des zweiten Bitmusters 50 ein drittes Zugriffsklassenbit Z1 und das fünfte Bit des zweiten Bitmusters 50 ein viertes Zugriffsklassenbit Z0. Das erste Zugriffsklassenbit Z3 steht für die erste Nutzerklasse 35, das zweite Zugriffsklassenbit Z2 steht für die zweite Nutzerklasse 40, das dritte Zugriffsklassenbit Z1 steht für eine dritte, in Figur 1 nicht dargestellte Nutzerklasse und das vierte Zugriffsklassenbit Z0 steht für eine vierte in Figur 1 ebenfalls nicht dargestellt Nutzerklasse. Die Zugriffsklassenbits werden in ihrer Gesamtheit auch als Zugriffsklasseninformationen bezeichnet.
Gemäß Figur 1 sind alle Mobilstationen 5,10,15,20 der ersten Nutzerklasse 35 oder der zweiten Nutzerklasse 40 zugeordnet. Weitere, in Figur 1 nicht dargestellte Mobilstationen können ebenfalls der ersten Nutzerklasse 35 oder der zweiten Nutzerklasse 40 zugeordnet sein. Sie können aber auch der dritten Nutzerklasse oder der vierten Nutzerklasse oder gar keiner Nutzerklasse zugeordnet sein. Wenn ein Zugriffsklassenbit im zweiten Bitmuster 50 den Wert 0 hat, dass heißt nicht gesetzt ist, so dürfen alle Mobilstationen der zugeordneten Nutzerklasse auf den RACH 30 zugreifen.

Wenn ein Zugriffsklassenbit des zweiten Bitmusters 50 auf 1 gesetzt ist, so darf keine Mobilstation der zugeordneten Nutzerklasse auf den RACH 30 zugreifen.

Alle Mobilstationen, die auf den RACH 30 zugreifen dürfen, können diejenigen Telekommunikationsdienste nutzen, deren zugeordnete Telekommunikationsdienstbits im ersten Bitmuster 45 bzw. im zweiten Bitmuster 50 gesetzt sind.

Es kann auch vorgesehen sein, dass in einem Speicher der Auswerteeinheit ein vorgegebener Prioritätswert abgespeichert ist, der einem der vier möglichen Prioritätswerte entspricht. Für den Fall, dass die Auswerteeinheit 60 auf die Zugangsberechtigungskarte 75 keinen Prioritätswert ermittelt, kann sie den vorgegebenen Prioritätswert zum Vergleich mit dem Prioritätsschwellwert P in der beschriebenen Weise verwenden.

Die Zugehörigkeit zu einer Nutzerklasse entnimmt die Auswerteeinheit der entsprechenden Mobilstation ebenfalls von der Zugangsberechtigungskarte 75. Ist dort keine Nutzerklasse gespeichert, so erkennt die Auswerteeinheit der entsprechenden Mobilstation, dass diese keiner Nutzerklasse angehört.

Wenn das Auswertebit S4 auf 1 gesetzt ist, ist kein Zugriff von Mobilstationen auf den RACH 30 möglich, die keiner Nutzerklasse angehören.

Im folgenden wird am Beispiel für ein mit dem Informationssignal übertragenes Bitmuster der Bitlänge von 10 Bit beschrieben. Bei diesem Beispiel wird die Bitfolge "auf 0 1000 011 01" an die Mobilstationen 5,10,15,20 von der Basisstation 100 über den BCCH 25 gesendet. Das bedeutet, dass die Mobilstationen, die einer Nutzerklasse zugeordnet sind, wie Mobilstationen behandelt werden, die keiner Nutzerklasse zugeordnet sind, da das Auswertebit S4 nicht gesetzt ist. Durch die Zugriffsschwellwert-Bits S3, S2, S1, S0 wird der Zugriffsschwellwert S binär kodiert und durch die Prioritätsbits P1, P0 wird der Prioritätsschwellwert P binär kodiert. Für den Zugriffsschwellwert S ergibt sich somit ein Wert von 8 und für den Prioritätsschwellwert P ein Wert von 1. Ist eine Mobilstation nach Auswertung von P und S zugriffsberechtigt, so darf sie den RACH jedoch lediglich zur Kanalanforderung für größere Paketdatendienste und für Sprach-/Datendienste nutzen. Aufgrund der obigen Einstellung für die Dienstinformation ist es solchen Mobilstationen NICHT erlaubt, den RACH für die Versendung kleiner Datenpakete zu nutzen.
Das zweite, dritte, vierte und fünfte Bit des ersten Bitmusters 45 bzw. des zweiten Bitmusters 50 stellen Zugriffsberechtigungsinformationen dar, die beim ersten Bitmuster 45 den Zugriffsschwellwert S und beim zweiten Bitmuster 50 die Zugangsberechtigung für die vier Nutzerklassen angeben. Das erste Bit bestimmt dabei, ob das zweite bis fünfte Bit gemäß dem ersten Bitmuster 45 oder gemäß dem zweiten Bitmuster 50 interpretiert wird.

In einem zweiten Ausführungsbeispiel wird in Fig 3c ein drittes Bitmuster 55 mit den Informationssignalen von der Basisstation 100 zu den Mobilstationen 5,10,15,20 übertragen, dass eine Bitlänge von 13 Bit aufweist. Das dritte Bitmuster 55 weist kein Auswertebit S4 auf und umfasst daher sowohl die Zugriffsschwellwert-Bits S3,S2,S1,S0 als auch die Zugriffsklassenbits Z3,Z2,Z1,Z0. Zusätzlich umfasst das dritte Bitmuster 55 wie auch das erste Bitmuster 45 und das zweite Bitmuster 50 die Telekommunikationsdienstbits D2,D1,D0 und die Prioritätsbits P1,P0. Mobilstationen, die einer Nutzerklasse angehören, für die das zugehörigen Zugriffsklassenbit = 0 ist, können unabhängig vom Zugriffsschwellwert S und vom Prioritätsschwellwert P und damit ggf. ohne deren Auswertung in der Auswerteeinheit 60 auf den RACH 30 zugreifen. Mobilstationen, die einer Nutzerklasse angehören, deren zugeordnetes Zugriffsklassenbit auf 1 gesetzt ist, sowie Mobilstationen, die keiner Nutzerklasse angehören, müssen zur Ermittlung ihrer Zugriffsberechtigung auf den RACH 30 die bereits im ersten Ausführungsbeispiel beschriebenen Zugriffsschwellwert - und ggf. zusätzlich die im ersten Ausführungsbeispiel beschriebenen Prioritätsschwellwertauswertung durchführen. Als Beispiel wird die folgende Bitfolge betrachtet: "1000 0110 011 01". Dies bedeutet, dass eine Zugriffsschwelle S = 8 gewählt wurde, dass die Mobilstationen der ersten Nutzerklasse 35 und der vierten, in Figur 1 nicht dargestellten Nutzerklasse unabhängig von einer Auswertung des Zugriffsschwellwertes S und ggf. des Prioritätsschwellwertes P auf den RACH 30 zugreifen dürfen, dass die Mobilstationen der zweiten Nutzerklasse 40 und der in Figur 1 nicht dargestellten dritten Nutzerklasse nicht ohne Auswertung des Zugriffsschwellwertes S und ggf. des Prioritätsschwellwertes auf den RACH 30 zugreifen dürfen. Für den Prioritätsschwellwert P ergibt sich ein Wert von 1. Die zugriffsberechtigten Mobilstationen dürfen den RACH nicht zur Versendung kleiner Datenpakte nutzen, jedoch dürfen sie auf dem RACH Kanalanforderungen für größere Paketdatendienste und Sprach-/Datendienste senden. Im Gegensatz zum ersten Ausführungsbeispiel ist es beim zweiten Ausführungsbeispiel möglich, dass neben Mobilstationen, die aufgrund ihrer Zugehörigkeit zu einer Nutzerklasse auf den RACH 30 zugreifen dürfen, auch solche Mobilstationen auf den RACH 30 zugreifen dürfen, die eine Zufalls- oder Pseudozufallszahl R größer gleich dem Zugriffsschwellwert S ziehen und ggf. einen Prioritätswert oberhalb des Prioritätsschwellwertes P aufweisen.

Im Vergleich zum ersten Bitmuster und zum zweiten Bitmuster enthalten beim dritten Bitmuster die Zugriffsberechtigungsinformationen sowohl die Zugriffsschwellwertbits S3, S2, S1, S0 als auch die Zugriffsklassenbits Z3, Z2, Z1, Z0.

Die im ersten, zweiten und dritten Bitmuster 45, 50 ,55 verwendeten Anzahlen von Bits für den Zugriffssschwellwert S, die Zugriffsklasseninformation Z0, Z1, Z2, Z3, den Prioritätsschwellwert P und die Teilnehmerdiensteinformationen D0, D1, D2 sind lediglich beispielhaft zu verstehen und können, beispielsweise zum umfangreicheren Signalisieren erhöht und zur Bandbreitenreduktion verringert werden. In diesem Fall ändert sich gegebenenfalls auch die Gesamtlänge der Bitmuster 45, 50, 55. Gegebenenfalls können einzelne der Informationskomponenten auch gänzlich ausgelassen werden.

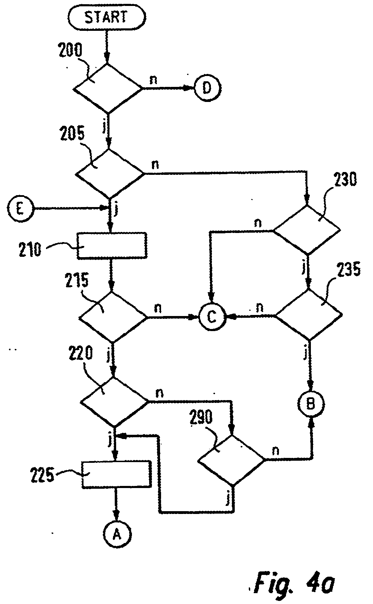

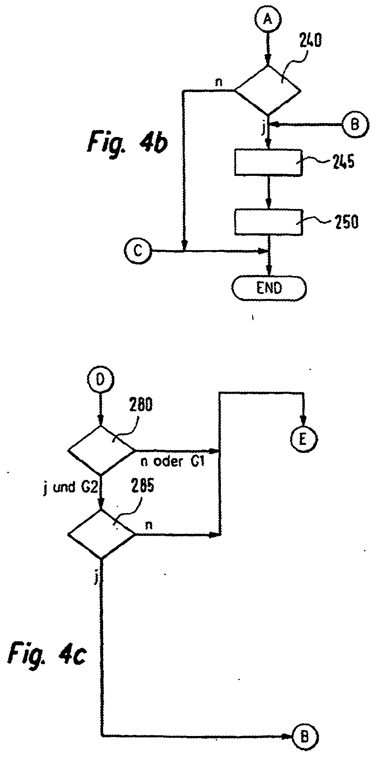

In den Figuren 4a, 4b und 4c ist ein Ablaufplan für die Funktionsweise der Auswerteeinheit 60 dargestellt. Bei einem Programmpunkt 200 prüft die Auswerteeinheit 60, ob die über den BCCH 25 empfangenen Informationssignale ein Bitmuster der Bitlänge von 10 Bit umfassen. Ist dies der Fall, so wird zu einem Programmpunkt 205 verzweigt, andernfalls wird zu einem Programmpunkt 280 verzweigt. Beim Programmpunkt 205 prüft die Auswerteeinheit 60, ob das Auswertebit S4 = 0 ist. Ist dies der Fall, so wird zu einem Programmpunkt 210 verzweigt, andernfalls wird zu einem Programmpunkt 230 verzweigt. Bei Programmpunkt 210 ermittelt die Auswerteeinheit 60 aus den Zugriffsschwellwertbits S3, S2, S1, S0 den Zugriffsschwellwert S und zieht eine Zufalls- oder Pseudozufallszahl R aus der Menge der möglichen Zugriffsschwellwerte S, wobei der größtmögliche Zugriffsschwellwert S für das Ziehen der Zufalls- oder Pseudozufallszahl R ausgenommen sein kann. Anschließend wird zu einem Programmpunkt 215 verzweigt. Bei Programmpunkt 215 prüft die Auswerteeinheit 60, ob die Zufalls- oder Pseudozufallszahl R größer oder gleich dem Zugriffsschwellwert S ist. Ist dies der Fall, so wird zu einem Programmpunkt 220 verzweigt, andernfalls wird das Programm verlassen. Bei Programmpunkt 220 prüft die Auswerteeinheit 60, ob auf der Zugangsberechtigungskarte 75 ein Prioritätswert einer zugehörigen Prioritätsklasse gespeichert ist. Ist dies der Fall, so wird zu einem Programmpunkt 225 verzweigt, andernfalls wird zu einem Programmpunkt 290 verzweigt. Bei Programmpunkt 290 prüft die Auswerteeinheit 60, ob in einem ihr zugeordneten Speicher ein vorgegebener Prioritätswert abgelegt ist. Ist dies der fall, so wird zum Programmpunkt 225 verzweigt, andernfalls wird zu einem Programmpunkt 245 verzweigt. Bei Programmpunkt 225 ermittelt die Auswerteeinheit 60 aus dem empfangenen Bitmuster den Prioritätsschwellwert P. Anschließend wird zu einem Programmpunkt 240 verzweigt. Bei Programmpunkt 240 prüft die Auswerteeinheit 60, ob der Prioritätswert größer oder gleich der Prioritätsschwelle P ist. Ist dies der Fall, so wird zum Programmpunkt 245 verzweigt, andernfalls wird das Programm verlassen. Bei Programmpunkt 245 ermittelt die Auswerteeinheit 60 aus dem Bitmuster anhand der Telekommunikationsdienstbits die nutzbaren Telekommunikationsdienste. Anschließend wird zu einem Programmpunkt 250 verzweigt. Bei Programmpunkt 250 gibt die Auswerteeinheit 60 den Zugriff der zugehörigen Mobilstation auf den RACH 30 zur Nutzung der nutzbaren Telekommunikationsdienst frei. Anschließend wird das Programm verlassen. Bei Programmpunkt 230 prüft die Auswerteeinheit 60, ob auf der Zugangsberechtigungskarte 75 die Zugehörigkeit zu einer Nutzerklasse gespeichert ist. Ist dies der Fall, so wird zu einem Programmpunkt 235 verzweigt, andernfalls wird das Programm verlassen. Bei Programmpunkt 235 prüft die Auswerteeinheit 60 anhand der Zugriffsklassenbits, ob die anhand der Zugangsberechtigungskarte 75 ermittelte Nutzerklasse der Mobilstation für den Zugriff auf den RACH 30 zulässig ist. Ist dies der Fall, so wird zu Programmpunkt 245 verzweigt, andernfalls wird das Programm verlassen. Bei Programmpunkt 280 hat die Auswerteeinheit 60 erkannt, dass ein Bitmuster mit der Bitlänge von 13 Bit empfangen wurde und prüft, ob auf der Zugangsberechtigungskarte 75 eine Zugehörigkeit der zugehörigen Mobilstation zu einer Nutzerklasse gespeichert ist. Weiterhin wird bei Programmpunkt 280 geprüft, ob die Nutzerklasse zu einer ersten Gruppe von Nutzerklassen oder zu einer zweiten Gruppe von Nutzerklassen gehört. Die erste Gruppe von Nutzerklassen wird im folgenden auch als normalprivilegiert bezeichnet. Die zweite Gruppe von Nutzerklassen wird im folgenden auch als bevorrechtigt bezeichnet. Falls bei Programmpunkt 280 erkannt wird, dass auf der Zugangsberechtigungkarte 75 eine Zugehörigkeit der zugehörigen Mobilstation zu der bevorrechtigten Nutzerklasse besteht, so verzweigt das Programm zu Programmpunkt 285. Andernfalls, d.h. falls auf der Zugangsberechtigungskarte 75 keine Zugehörigkeit der Mobilstation zu einer Nutzerklasse erkannt wird oder wenn die normalprivilegierte Nutzerklasse erkannt wird, so verzweigt das Programm zu Programmpunkt 210. Ist dies der Fall, so wird zu einem Programmpunkt 285 verzweigt, andernfalls wird zu einem Programmpunkt 210 verzweigt. Bei Programmpunkt 285 prüft die Auswerteeinheit 60 anhand der Zugriffsklassenbits bei Z3, Z2, Z1, Z0 des empfangenen Bitmusters ob die für die Mobilstation ermittelte Nutzerklasse für den Zugriff auf den RACH 30 berechtigt ist. Ist dies der Fall, so wird zu Programmpunkt 245 verzweigt, andernfalls wird zu Programmpunkt 210 verzweigt. In allen Fällen, in denen das Programm nicht ausgehend vom Programmpunkt 250 verlassen wird, wird von der Auswerteeinheit 60 keine Zugriffserlaubnis auf den RACH 30 für die zugeordnete Mobilstation 5 ermittelt Nach der Beendigung des Programms teilt die Mobilstation dem Benutzer mit, dass der Zugriff auf den RACH 30 nicht möglich war und erwartet weitere Eingaben des Benutzers. Alternativ dazu wird durch eine in der Mobilstation realisierte Warteschleife das Programm neu durchlaufen, so dass das nachfolgende Informationssignal mit dem nachfolgenden Bitmuster abgewartet und zur Ermittlung der Zugangsberechtigung auf den RACH 30 ausgewertet wird.

Die Informationssignale werden von der Basisstation 100 zu der Mobilstation 5,10,15,20 zu vorgegebenen Zeiten, vorzugsweise in regelmäßigen Abständen übertragen. Der Netzbetreiber kann den Zugriff auf den RACH in Abhängigkeit des Nachrichtenverkehrsaufkommens im Telekommunikationsnetz und damit in Abhängigkeit einer erwarteten Auslastung des RACH 30 für die einzelnen Mobilstationen 5,10,15,20 gemäß dem beschriebenen Verfahren erlauben oder sperren. Da sich das Nachrichtenverkehrsaufkommen im Telekommunikationsnetz mit der Zeit verändert, ändert sich auch die erwartete Auslastung des RACH 30 mit der Zeit, so dass Zugriff auf den RACH in der Regel zu verschiedenen Zeiten mittels entsprechend veränderter Bitmusterbelegung den verschiedenen Mobilstationen 5,10,15,20 zugeteilt wird.

Eine Entlastung des RACH 30 kann zusätzlich dadurch erzielt werden, dass ein Wiederholungszähler und/oder ein Wiederholungsabstand vorgesehen ist. Der Wiederholungszähler gibt die maximale Anzahl der erlaubten Wiederholversuche für ein wiederholtes Absenden einer Nachricht von der entsprechenden Mobilstation über den RACH 30 an die Basisstation 100 für den Fall der Kollision mit einer Nachricht einer anderen Mobilstation an. Der Wiederholungsabstand ist ein stochastisches Maß für den zeitlichen Abstand bis zur nächsten Wiederholung der von der jeweiligen Mobilstation an die Basisstation 100 über den RACH 30 gesendeten Nachricht. Je kleiner die Anzahl der erlaubten Wiederholversuche und je größer der Wiederholungsabstand, desto größer die Entlastung des RACH 30. Der Wiederholungszähler und/oder der Wiederholungsabstand kann in regelmäßigen Zeitabständen zusammen mit dem Bitmuster der zugeteilten Zugriffsrechte den entsprechenden Mobilstationen gegebenenfalls zusammen mit weiteren funkzellenspezifischen Informationen auf dem zugehörigen Signalisierungskanal 25 mitgeteilt werden.
Das erfindungsgemäße Verfahren kann in einem Mobilfunknetz nach UMTS-Standard (Universal Mobile Telecommunication System), nach GSM-Standard, oder dergleichen realisiert werden.

Das erfindungsgemäße Verfahren ist nicht auf die Anwendung in einem Mobilfunknetz beschränkt, sondern generell in Telekommunikationsnetzen anwendbar, in denen ein Telekommunikationskanal existiert, welcher zur Anforderung von Telekommunikationsdiensten und/oder zum Versenden von Datenpaketen von mehreren Teilnehmerstationen benutzt wird, wobei das Telekommunikationsnetz beispielsweise auch ein drahtgebundenes Festnetz sein kann.

In einer anderen Ausführungsform kann es auch vorgesehen sein, dass für eine Zugangsberechtigung eine Zufallszahl oder Pseudozufallszahl R kleiner als der Zugriffsschwellwert S vorausgesetzt wird. Entsprechend kann auch für die Prioritätsprüfung mittels des Prioritätsschwellwertes P vorausgesetzt werden, dass die Zufallszahl oder die Pseudozufallszahl R kleiner als der Prioritätsschwellwert P ist.

## Patentansprüche

1. Teilnehmerstation (5, 10, 15, 20) zum Betrieb in einem Mobilfunknetz, der ein Zugriff auf einen von mehreren Teilnehmerstationen gemeinsam nutzbaren Telekommunikationskanal (30), der insbesondere ein wahlfreier Zugriffskanal RACH (30) ist, erteilbar ist, wobei die Teilnehmerstation (5, 10, 15, 20) Mittel aufweist
zum Empfang von Zugriffsberechtigungsdaten, wobei die Zugriffsberechtigungsdaten sowohl einen Zugriffsschwellwert (S) als auch Zugriffsklasseninformationen (Z0, Z1, Z2, Z3) für Nutzerklassen der Teilnehmerstationen enthalten,
**dadurch gekennzeichnet, dass** eine Auswerteeinheit der Teilnehmerstation eingerichtet ist
• zur Ermittlung einer Nutzerklasse (35, 40) der Teilnehmerstation (5, 10, 15, 20), und
• zur Prüfung in Abhängigkeit der Zugriffsklasseninformation (Z0, Z1, Z2, Z3) für die Nutzerklasse (35, 40) der Teilnehmerstation, ob die Zugriffsberechtigungsdaten (S0, S1, S2, S3, Z0, Z1, Z2, Z3) für einen Zugriff auf den Telekommunikationskanal (30) den Zugriffsschwellwert (S) umfassen, oder ob die Teilnehmerstation (5, 10, 15, 20) ohne ein Auswerten des Zugriffsschwellwertes (S) auf den Telekommunikationskanal (30) zugreifen kann.

2. Teilnehmerstation (5, 10, 15, 20) nach Anspruch 1 **dadurch gekennzeichnet, dass** wenn die Zugriffsberechtigungsdaten (S0, S1, S2, S3, Z0, Z1, Z2, Z3) für den Zugriff auf den Telekommunikationskanal (30) einen Zugriffsschwellwert (S) umfassen, die Teilnehmerstation (5, 10, 15, 20) zur Ermittlung ihrer Zugriffsberechtigung auf den Telekommunikationskanal (30), insbesondere einen wahlfreien Zugriffskanal RACH (30), eine Auswertung des Zugriffsschwellwerts durchführt.

3. Teilnehmerstation (5, 10, 15, 20) nach Anspruch 2 **dadurch gekennzeichnet, dass** die Auswertung des Zugriffsschwellwerts derart durchgeführt wird, dass der Zugriffsschwellwert (S) mit einer Zufallszahl oder einer Pseudo-Zufallszahl (R) verglichen wird, und das Zugriffsrecht auf den Telekommunikationskanal in Abhängigkeit des Vergleichsergebnisses zugeteilt wird.

4. Verfahren zur Vergabe von Zugriffsrechten auf einen von mehreren Teilnehmerstationen gemeinsam nutzbaren Telekommunikationskanal (30) eines Mobilfunknetzes, der insbesondere ein wahlfreier Zugriffskanal RACH (30) ist, wobei das Mobilfunknetz mit mindestens einer Basisstation (100) eine Funkzelle aufspannt, in der sich Teilnehmerstationen befinden, wobei die Basisstation an die Teilnehmerstationen (5, 10, 15, 20) Zugriffsberechtigungsdaten, die sowohl einen Zugriffsschwellwert (S) als auch Zugriffsklasseninformationen (Z0, Z1, Z2, Z3) für Nutzerklassen der Teilnehmerstationen enthalten, sendet, **dadurch gekennzeichnet, dass** den Teilnehmerstationen mit den Zugriffsberechtigungsdaten Rechte für das Senden auf dem Telekommunikationskanal derart zugeteilt werden, dass
die jeweiligen Teilnehmerstationen in Abhängigkeit der Zugriffsklasseninformation (Z0, Z1, Z2, Z3) für ihre jeweilige Nutzerklasse (35, 40) prüfen können, ob die Zugriffsberechtigungsdaten für einen Zugriff auf den Telekommunikationskanal (30) den Zugriffsschwellwert (S) umfassen, oder ob die jeweiligen Teilnehmerstationen (5, 10, 15, 20) ohne ein Auswerten des Zugriffsschwellwertes (S) auf den Telekommunikationskanal (30) zugreifen können.

5. Verfahren nach Anspruch 4 **dadurch gekennzeichnet, dass** wenn die Zugriffsberechtigungsdaten (S0, S1, S2, S3, Z0, Z1, Z2, Z3) für den Zugriff auf den Telekommunikationskanal (30) einen Zugriffsschwellwert (S) umfassen, die Teilnehmerstation (5, 10, 15, 20) zur Ermittlung ihrer Zugriffsberechtigung auf den Telekommunikationskanal (30), insbesondere einen wahlfreien Zugriffskanal RACH (30), eine Auswertung des Zugriffsschwellwerts durchführt.

6. Verfahren nach Anspruch 5 **dadurch gekennzeichnet, dass** die Auswertung des Zugriffsschwellwerts derart durchgeführt wird, dass der Zugriffsschwellwert (S) mit einer Zufallszahl oder einer Pseudo-Zufallszahl (R) verglichen wird, und das Zugriffsrecht auf den Telekommunikationskanal der mindestens einen Teilnehmerstationen (5, 10, 15, 20) in Abhängigkeit des Vergleichsergebnisses zugeteilt wird.

7. Verfahren nach einem der Ansprüche 4 bis 6 **dadurch gekennzeichnet, dass** die Zugriffsberechtigungsdaten Rechte für das Senden auf dem Telekommunikationskanal den jeweiligen Teilnehmerstationen derart zuteilt, dass neben Teilnehmerstationen, die aufgrund ihrer Zugehörigkeit zu einer Nutzerklasse unabhängig vom Zugriffsschwellwert (S), auch Teilnehmerstationen einer oder mehrerer, anderer Nutzerklassen auf den Telekommunikationskanal zugreifen dürfen, die nicht ohne Auswertung des Zugriffschwellwertes (S) auf den Telekommunikationskanal (30) zugreifen dürfen.

8. Verfahren nach einem der Ansprüche 4 bis 7 **dadurch gekennzeichnet, dass** die Basisstation zu allen Mobilstationen (5, 10, 15, 20) einer Zelle den gleichen Zugriffsschwellwert (S) sendet.

9. Mobilfunknetz, das insbesondere aus mindestens einer Basisstation besteht, die eine Funkzelle aufspannt, und das aufweist
• Mittel zum Informieren von Teilnehmerstationen (5, 10, 15, 20) einer Funkzelle über zugeteilte Zugriffsrechte für jede Nutzerklasse (35, 40) der Teilnehmerstationen auf einen von mehreren Teilnehmerstationen gemeinsam nutzbaren Telekommunikationskanal des Mobilfunknetzes, der insbesondere ein wahlfreier Zugriffskanal RACH ist,
• Mittel zum Senden von Zugriffsberechtigungsdaten, die sowohl einen Zugriffsschwellwert (S) als auch Zugriffsklasseninformationen (Z0, Z1, Z2, Z3) für vorgegebene Nutzerklassen der Teilnehmerstationen enthalten, über einen Signalisierungskanal (25), und
• Mittel zum Zuteilen von Zugriffsrechten für die Teilnehmerstationen mittels der Zugriffsberechtigungsdaten,
**dadurch gekennzeichnet, dass**
die einzelne Teilnehmerstation Mittel aufweist zum Prüfen in Abhängigkeit der Zugriffsklasseninformation (Z0, Z1, Z2, Z3) für ihre Nutzerklasse (35, 40), ob die Zugriffsberechtigungsdaten für einen Zugriff auf den Telekommunikationskanal (30) den Zugriffsschwellwert (S) umfassen, oder ob die Teilnehmerstation (5, 10, 15, 20) ohne eine Auswertung des Zugriffschwellwertes (S) auf den Telekommunikationskanal (30) zugreifen darf.

10. Mobilfunknetz nach Anspruch 9 **dadurch gekennzeichnet, dass** wenn die Zugriffsberechtigungsdaten (S0, S1, S2, S3, Z0, Z1, Z2, Z3) für den Zugriff auf den Telekommunikationskanal (30) einen Zugriffsschwellwert (S) umfassen, die Teilnehmerstation (5, 10, 15, 20) zur Ermittlung ihrer Zugriffsberechtigung auf den Telekommunikationskanal (30), insbesondere einen wahlfreien Zugriffskanal RACH (30), eine Auswertung des Zugriffsschwellwerts durchführt.

11. Mobilfunknetz nach Anspruch 10 **dadurch gekennzeichnet, dass** die Teilnehmerstation zur Auswertung des Zugriffsschwellwerts derart eingerichtet ist, dass der Zugriffsschwellwert (S) mit einer Zufallszahl oder einer Pseudo-Zufallszahl (R) verglichen wird, und das Zugriffsrecht auf den Telekommunikationskanal der mindestens einen Teilnehmerstationen (5, 10, 15, 20) in Abhängigkeit des Vergleichsergebnisses zugeteilt wird.

## Claims

1. Subscriber station (5, 10, 15, 20) for operation in a mobile reader network, which subscriber station can be granted access to a telecommunication channel (30), which is particularly a random access channel RACH (30) and which can be jointly used by a plurality of subscriber stations, wherein the subscriber station (5, 10, 15, 20) has means
for receiving access authorization data, wherein the access authorization data contain both an access threshold value (S) and access class information (Z0, Z1, Z2, Z3) for user classes of the subscriber stations,
**characterized in that** an evaluation unit of the subscriber station is set up
• to ascertain a user class (35, 40) of the subscriber station (5, 10, 15, 20), and
• to check depending on the access class information (Z0, Z1, Z2, Z3) for the user class (35, 40) of the subscriber station whether the access authorization data (S0, S1, S2, S3, Z0, Z1, Z2, Z3) for accessing the telecommunication channel (30) comprise the access threshold value (S), or whether the subscriber station (5, 10, 15, 20) can access the telecommunication channel (30) without evaluating the access threshold value (S).

2. Subscriber station (5, 10, 15, 20) according to Claim 1, **characterized in that** when the access authorization data (S0, S1, S2, S3, Z0, Z1, Z2, Z3) for accessing the telecommunication channel (30) comprise an access threshold value (S), the subscriber station (5, 10, 15, 20) ascertains its access authorization for the telecommunication channel (30), particularly a random access channel RACH (30), by performing an evaluation of the access threshold value.

3. Subscriber station (5, 10, 15, 20) according to Claim 2, **characterized in that** the evaluation of the access threshold value is performed such that the access threshold value (S) is compared with a random number or a pseudorandom number (R) and the access right to the telecommunication channel is allocated on the basis of the comparison result.

4. Method for allocating access rights to a telecommunication channel (30) of a mobile radio network, which is particularly a random access channel RACH (30) and which can be jointly used by a plurality of subscriber stations, wherein the mobile radio network uses at least one base station (100) to span a radio cell that contains subscriber stations, wherein the base station sends the subscriber stations (5, 10, 15, 20) access authorization data that contain both an access threshold value (S) and access class information (Z0, Z1, Z2, Z3) for user classes of the subscriber stations, **characterized in that** the access authorization data are used to allocate to the subscriber stations rights for sending on a telecommunication channel such that
the respective subscriber stations can check based on the access class information (Z0, Z1, Z2, Z3) for their respective user class (35, 40) whether the access authorization data for accessing the telecommunication channel (30) comprise the access threshold value (S), or whether the respective subscriber stations (5, 10, 15, 20) can access the telecommunication channel (30) without evaluating the access threshold value (S).

5. Method according to Claim 4, **characterized in that** when the access authorization data (S0, S1, S2, S3, Z0, Z1, Z2, Z3) for accessing the telecommunication channel (30) comprise an access threshold value (S), the subscriber station (5, 10, 15, 20) ascertains its access authorization for the telecommunication channel (30), particularly a random access channel RACH (30), by performing an evaluation of the access threshold value.

6. Method according to Claim 5, **characterized in that** the evaluation of the access threshold value is performed such that the access threshold value (S) is compared with a random number or a pseudorandom number (R) and the access right to the telecommunication channel of the at least one subscriber station (5, 10, 15, 20) is allocated on the basis of the comparison result.

7. Method according to one of Claims 4 to 6, **characterized in that** the access authorization data allocate to the respective subscriber stations rights for sending on the telecommunication channel such that, besides subscriber stations that, on account of their association with a user class, regardless of the access threshold value (S), it is also permitted for subscriber stations from one or more other user classes to access the telecommunication channel that are not permitted to access the telecommunication channel (30) without evaluating the access threshold value (S).

8. Method according to one of Claims 4 to 7, **characterized in that** the base station sends the same access threshold value (S) to all the mobile stations (5, 10, 15, 20) of a cell.

9. Mobile radio network that consists particularly of at least one base station spanning a radio cell and that has
• means for informing subscriber stations (5, 10, 15, 20) of a radio cell about allocated access rights for each user class (35, 40) of the subscriber stations to a telecommunication channel of the mobile radio network, which is particularly a random access channel RACH and which can be jointly used by a plurality of subscriber stations,
• means for sending access authorization data, which contain both an access threshold value (S) and access class information (Z0, Z1, Z2, Z3) for prescribed user classes of the subscriber stations, via a signalling channel (25), and
• means for allocating access rights for the subscriber stations using the access authorization data,
**characterized in that**
the individual subscriber station has means for checking based on the access class information (Z0, Z1, Z2, Z3) for its user class (35, 40) whether the access authorization data for accessing the telecommunication channel (30) comprise the access threshold value (S) or whether the subscriber station (5, 10, 15, 20) is permitted to access the telecommunication channel (30) without evaluating the access threshold value (S).

10. Mobile radio network according to Claim 9, **characterized in that** when the access authorization data (S0, S1, S2, S3, Z0 Z1, Z2, Z3) for accessing the telecommunication channel (30) comprise an access threshold value (S), the subscriber station (5, 10, 15, 20) ascertains its access authorization for the telecommunication channel (30), particularly a random access channel RACH (30), by performing an evaluation of the access threshold value.

11. Mobile radio network according to Claim 10, **characterized in that** the subscriber station is set up to evaluate the access threshold value such that the access threshold value (S) is compared with a random number or a pseudorandom number (R) and the access right to the telecommunication channel of the at least one subscriber station (5, 10, 15, 20) is allocated on the basis of the comparison result.

## Revendications

1. Station d'abonné (5, 10, 15, 20) destinée à la mise en fonctionnement d'un réseau mobile, qui peut être autorisée à accéder à un accès à un canal de télécommunication (30) utilisable en commun par de multiples stations d'abonnés, qui est notamment un canal d'accès facultatif RACH (30), dans lequel la station d'abonné (5, 10, 15, 20) comprend des moyens permettant de recevoir des données de permission d'accès dans laquelle les données de permission d'accès contiennent une valeur de seuil d'accès (S) ainsi que des informations de classes d'accès (Z0, Z1, Z2, Z3) pour des classes d'utilisateurs des stations d'abonnés, **caractérisée en ce qu'**une unité d'évaluation de la station d'abonné est conçue
- pour déterminer une classe d'utilisateurs (35, 40) de la station d'abonné (5, 10, 15, 20), et
- pour tester, en fonction de l'information de classe d'accès (Z0, Z1, Z2, Z3) correspondant à la classe d'utilisateurs (35, 40) de la station d'abonné, si les données de permission d'accès (S0, S1, S2, S3, Z0, Z1, Z2, Z3) pour un accès au canal de télécommunication (30) comprennent la valeur de seuil d'accès (S) ou si la station d'abonné (5, 10, 15, 20) peut accéder au canal de télécommunication (30) sans évaluer la valeur de seuil d'accès (S).

2. Station d'abonné (5, 10, 15, 20) selon la revendication 1, **caractérisée en ce que**, lorsque les données de permission d'accès (S0, S1, S2, S3, Z0, Z1, Z2, Z3) pour l'accès au canal de télécommunication (30) comprennent une valeur de seuil d'accès (S), la station d'abonné (5, 10, 15, 20) effectue une évaluation de la valeur de seuil d'accès pour déterminer sa permission d'accès au canal de télécommunication (30), et plus particulièrement à un canal d'accès facultatif RACH (30).

3. Station d'abonné (5, 10, 15, 20) selon la revendication 2, **caractérisée en ce que** l'évaluation de la valeur de seuil d'accès est effectuée en comparant la valeur de seuil d'accès (S) à un nombre aléatoire ou à un nombre pseudo-aléatoire (R) et en ce conférant le droit d'accès au canal de télécommunication en fonction du résultat de la comparaison.

4. Procédé d'attribution de droits d'accès à un canal de télécommunication (30) d'un réseau mobile utilisable en commun par une pluralité de stations d'abonnés, lequel canal de télécommunication est plus particulièrement un canal d'accès facultatif RACH (30), dans lequel le réseau mobile couvre, au moyen d'au moins une station de base (100), une cellule radio dans laquelle se trouvent des stations d'abonné, dans lequel la station de base émet vers les stations d'abonnés (5, 10, 15, 20) des données de permission d'accès qui contiennent une valeur de seuil d'accès (S) ainsi que des informations de classes d'accès (Z0 Z1, Z2, Z3) pour des classes d'utilisateurs des stations d'abonnés, **caractérisé en ce que** des droits à émettre sur le canal de télécommunication sont attribués aux stations d'abonnés à l'aide des données de permission d'accès de telle manière que
les stations d'abonnés respectives puissent vérifier, en fonction de l'information de classe d'accès (Z0, Z1, Z2, Z3) correspondant à leur classe d'utilisateurs respective (35, 40) si les données de permission d'accès pour un accès au canal de télécommunication (30) comprennent la valeur de seuil d'accès (S) ou si les stations d'abonnés respectives (5, 10, 15, 20) peuvent accéder au canal de télécommunication (30) sans évaluer la valeur de seuil d'accès (S).

5. Procédé selon la revendication 4, **caractérisé en ce que**, lorsque les données de permission d'accès (S0, S1, S2, S3, Z0, Z1, Z2, Z3) correspondant à l'accès au canal de télécommunication (30) comprennent une valeur de seuil d'accès (S), la station d'abonné (5, 10, 15, 20) effectue une évaluation de la valeur de seuil d'accès pour déterminer sa permission d'accès au canal de télécommunication (30), et plus particulièrement à un canal d'accès facultatif RACH (30).

6. Procédé selon la revendication 5, **caractérisé en ce que** l'évaluation de la valeur de seuil d'accès est effectuée en comparant la valeur de seuil d'accès (S) à un nombre aléatoire ou à un nombre pseudo-aléatoire (R) et en conférant le droit d'accès au canal de télécommunication à l'au moins une station d'abonné (5, 10, 15, 20) en fonction du résultat de la comparaison.

7. Procédé selon l'une quelconque des revendications 4 à 6, **caractérisé en ce que** les données de permission d'accès confèrent aux stations d'abonnés respectifs des droits à émettre sur le canal de télécommunication de telle manière qu'outre des stations d'abonnés qui sur la base de leur appartenance à une classe d'utilisateurs indépendamment de la valeur de seuil d'accès (S), des stations d'abonnés appartenant à une ou plusieurs autres classes d'utilisateurs peuvent également accéder au canal de télécommunication, lesquelles stations ne sont pas autorisées à accéder au canal de télécommunication (30) sans évaluer la valeur de seuil (S).

8. Procédé selon l'une quelconque des revendications 4 à 7, **caractérisé en ce que** la station de base émet la même valeur de seuil d'accès (S) vers toutes les stations mobiles (5, 10, 15, 20) d'une cellule.

9. Réseau mobile, notamment constitué d'au moins une station de base, couvrant une cellule radio et comprenant
- des moyens destinés à informer des stations d'abonnés (5, 10, 15, 20) d'une cellule radio des droits d'accès qui leur sont conférés pour chaque classe d'utilisateurs (35, 40) des stations d'abonnés à un canal de télécommunication utilisable en commun par une pluralité de stations d'abonnés du réseau mobile, lequel canal de télécommunication est notamment un canal d'accès facultatif RACH,
- des moyens destinés à émettre des données de permission d'accès qui contiennent une valeur de seuil d'accès (S) ainsi que des informations de classes d'accès (Z0, Z1, Z2, Z3) pour des classes d'utilisateurs prédéterminées des stations d'abonnés, sur un canal de signalisation (25), et
- des moyens destinés à conférer des droits d'accès aux stations d'abonnés au moyen des données de permission d'accès,
**caractérisé en ce que**
la station d'abonné individuelle comprend des moyens destinés à vérifier, en fonction de l'information de classe d'accès (Z0 Z1, Z2, Z3) correspondant à sa classe d'accès (35, 40), si les données de permission d'accès pour accéder au canal de télécommunication (30) comprennent la valeur de seuil d'accès (S), ou si la station d'abonné (5, 10, 15, 20) peut accéder au canal de télécommunication (30) sans évaluer la valeur de seuil d'accès (S).

10. Réseau mobile selon la revendication 9, **caractérisé en ce que**, lorsque les données de permission d'accès (S0 S1, S2, S3, Z0 Z1, Z2, Z3) correspondant à l'accès au canal de télécommunication (30) comprennent une valeur de seuil d'accès (S), la station d'abonné (5, 10, 15, 20) effectue une évaluation de la valeur de seuil d'accès pour déterminer sa permission d'accès au canal de télécommunication (30), notamment à un canal d'accès facultatif RACH (30).

11. Réseau mobile selon la revendication 10, **caractérisé en ce que** la station d'abonné est conçue pour évaluer la valeur de seuil d'accès en comparant la valeur de seuil d'accès (S) à un nombre aléatoire ou à un nombre pseudo-aléatoire (R) et en conférant le droit d'accès au canal de télécommunication de l'au moins une station d'abonné (5, 10, 15, 20) en fonction du résultat de la comparaison.
